# EUROPEAN PATENT APPLICATION

(11) **EP 4 778 668 A2**
(43) Date of publication of application: **22.07.2026**
(21) Application number: 26153316.0
(22) Date of filing: 21.01.2026
(51) Int. Cl.: B23K 26/70

(54) **LASER TORCH CONSUMABLES AND ACCESSORIES WITH QUICK CONNECT AND ALIGNMENT**

(30) Priority: 21.01.2025 US 202563747630 P; 20.01.2026 US 202619453850
(71) Applicant: Illinois Tool Works Inc., Glenview IL 60025 (US)
(72) Inventor: HOEGER, Michael, Glenview, 60025 (US)
(74) Representative: HGF

(57) **Abstract**

Systems and methods are provided for quick connect laser torch consumables and accessories. A laser welding torch may include a plurality of torch components, with at least two torch components being configured to engage one another when assembling the laser welding torch. One or more torch components of the plurality of torch components may incorporate one or more indexing features and/or connect features configured for enabling quick connect and alignment of at least the two torch components of the plurality of torch components during the assembling of the laser welding torch. The indexing features may include at least one of a key feature and a slot feature. The connect features may include a plurality of different connect positions.

## Description

### CLAIM OF PRIORITY

This patent application claims priority to and claims benefit from United States Provisional Patent Application Serial No. 63/747,630, filed on January 21, 2025. The above identified application is hereby incorporated herein by reference in its entirety.

### BACKGROUND

Welding has become increasingly ubiquitous. Welding is typically done in manual manner (e.g., performed by a human) but in some instances may be performed in an automated manner (e.g., performed by robotic arm or the like). Equipment or components used during welding operations may be driven using engines. For example, engines may be used to drive, for example, generators, power sources, etc. used during welding operations.

In some instances, conventional welding-type systems may have some limitations and/or disadvantages. For example, assembling torches (e.g., laser welding torches) may be slow and unreliable process, particularly when combining different alterative components.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for quick connect laser torch consumables and accessories, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 illustrates a schematic diagram of an example laser welding system.
Fig. 2 illustrates an example handheld laser welding tool employing a beam expanding optic.
Figs. 3A and 3B illustrate example handheld laser welding tools, in accordance with aspects of this disclosure.
Fig. 4 illustrates example nozzle and focus assembly.
Fig. 5 illustrates example nozzle and focus assembly with indexing features.
Fig. 6 illustrates example nozzle with dual focus positions and focus assembly.
Fig. 7 illustrates various example components of laser welding torch with indexing features.
Fig. 8 illustrates example assembled laser welding torch with all components.
Figs. 9A-9I illustrate and example laser welding torch with components incorporating quick connect and alignment features.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

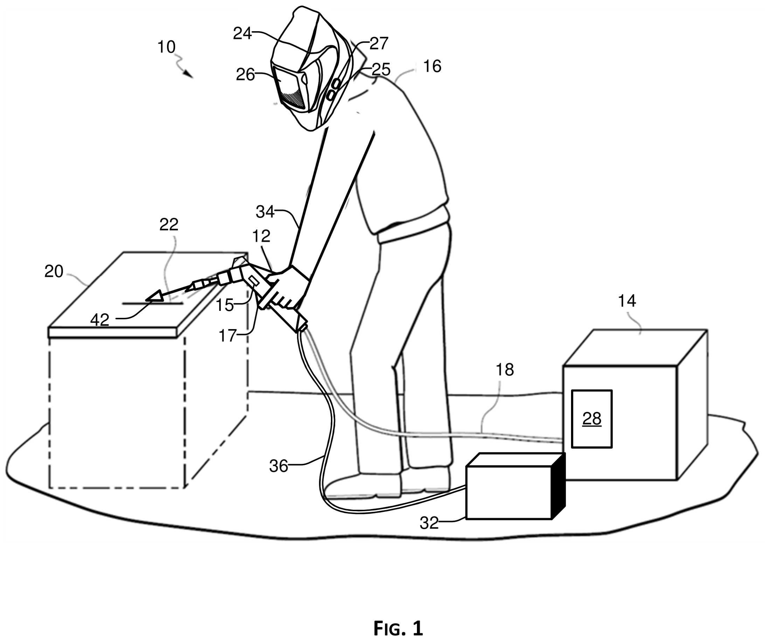

Fig. 1 illustrates a schematic diagram of an example laser welding system. Shown in Fig. 1 is laser welding system 10. The example laser welding system 10 of Fig. 1 includes a laser welding power supply 14, a laser power source 28, a laser controller 30, and a wire feeder 32. A laser welding torch 12 is connected to the power supply 14 via power cable 18, and receives wire 36 from the wire feeder 32.

The laser power source 28 generates welding-type laser power 42 (e.g., directed light energy) based on input power received from the power supply 14. The laser power source 28 may be a light emitting a CO2 laser, Nd:YAG laser, diode-type laser, fiber laser, disk laser or any other type of laser generator. As used herein, welding-type lasing power refers to laser power having wavelength(s) that are suitable for delivering energy to metal for welding, cutting, and/or cladding.

An operator 16 can wear one or more of a wearable 34 (such as a glove, a smartwatch, etc.) and/or a helmet 24. In some example implementations, the helmet 24 includes a screen 26, which may be configured to automatically dim when exposed to intense light, may be a filter for one or more wavelengths, and/or may be connected to another part of the system (e.g., controller 30). This allows the screen 26 to present information to the operator 16 to inform the welding process. In some example implementations, a helmet can include an auto-darkening filter (ADF). The filter may block and/or respond to specific wavelengths associated with laser welding, for instance, to darken the view screen. The filtering feature can also be applied to goggles and/or glasses.

In some example implementations, within the helmet, goggles, and/or glasses, a screen can be within view of the user, providing the view of a camera. This can be limited to the view from the camera, or may provide an augmented reality (AR) and/or virtual reality (VR) image. In some example implementations, the helmet 24 may include a sensor 27 (e.g., a heat sensor, a light sensor, an inertial measurement unit (IMU), an accelerometer, etc.) and/or a camera 25 (e.g., optical camera, infrared (IR) camera, etc.).

The laser welding torch 12 focuses the laser power 42 at a joint or weld 22 on a workpiece 20. The laser power 42 heats the workpiece 20 to generate a puddle during welding operations. The wire feeder 32 feeds the wire 36 (e.g., filler wire, cladding material, metal additive) to the puddle generated by the laser power 42. The wire 36 melts into the puddle in the weld 22. The wire 36 may be fed from a wire supply, such as a wire reel or wire supply drum, and may be conveyed through a cable or other suitable conduit.

During a welding process, the laser controller 30 controls a focal point of the laser beam to wobble in multiple axes as applied to the workpiece 20. By moving the focal point in multiple directions, the laser can induce one or more beneficial effects in the weld. Examples of such beneficial effects that can be induced in the lateral direction(s) include agitating or stirring of the puddle laterally (including in patterns) to improve filler mixing, creating a heat gradient in the puddle in at least a partially lateral direction to induce movement and improve puddle wetting, and/or controlling the heating and/or cooling rates of the puddle in at least a partially lateral direction by controlling where heat is concentrated.

In some example implementations, movement of the focal point of the laser beam is controlled such that side-to-side motion is variable, random, and/or has multiple changing directions, angles, and/or lengths. For instance, side-to-side movement of the focal point may promote gap filling, wetting at the toes of a workpiece, etc., and may be set to a high wobble frequency (e.g., greater than 100 wobbles/movements per second). An additional, possibly independently controlled forward-backward motion at a lower wobble frequency could be used to result in a substantially rippled appearance, similar to a traditional ripple look of tungsten inert gas (TIG) welds, and/or other desirable characteristics. As disclosed herein, wobble can be implemented on a wire as well as the laser beam to further enhance the quality and appearance of the weld bead.

In some example implementations, the wire feeder 32 can be fitted with one or more devices to control lateral movements of the wire 36, in addition to forward or backward movement thereof. For instance, the wire 36 may be channeled to the workpiece 20 and experience a force (e.g., from an actuator, barrier, a mechanical biasing element, etc.) which causes the wire 36 to move in a lateral pattern, circular motion, or other movement. In examples, patterned movement of the wire 36 can be controlled to sync with and/or complement the application of the laser beam 42. This can include applying a portion of the laser beam over the wire prior to the wire entering a weld bead (e.g., for preheating) and/or scanning the laser beam in a pattern, then controlling the wire to follow the pattern to enhance deposition rates and/or travel speed.

In some example implementations, a preheating device 15 (e.g., a resistive and/or inductive heater) is employed at or near the laser welding torch 12. Employing preheating can lower the amount of laser energy required to perform a weld, and/or increase the speed and/or amount of wire applied to a given weld. The preheating device 15 may include one or more sensors to gauge a temperature and/or enthalpy of the wire and/or workpiece. In some example implementations, the preheating device 15 includes and/or is operationally connected to an auxiliary switch (e.g., an arc clamp) to divert a portion of electrical current from the wire. In other words, if the laser welding system 10 senses an arc is forming between the wire 42 and a surface of the torch (e.g., nozzle, neck, etc.) and/or the workpiece 20 during a laser welding operation, the auxiliary switch can close a circuit to direct current away from the wire to avoid arcing between the wire and a metallic surface.

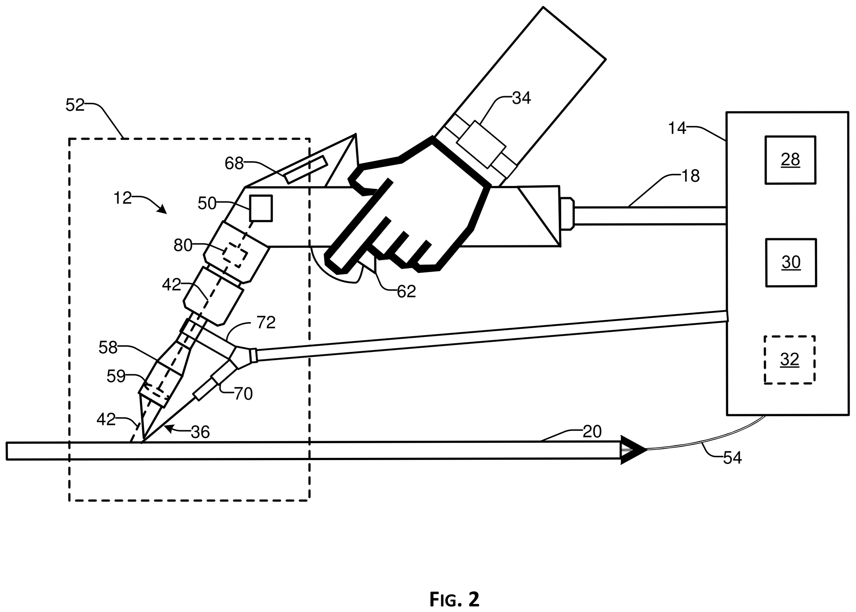

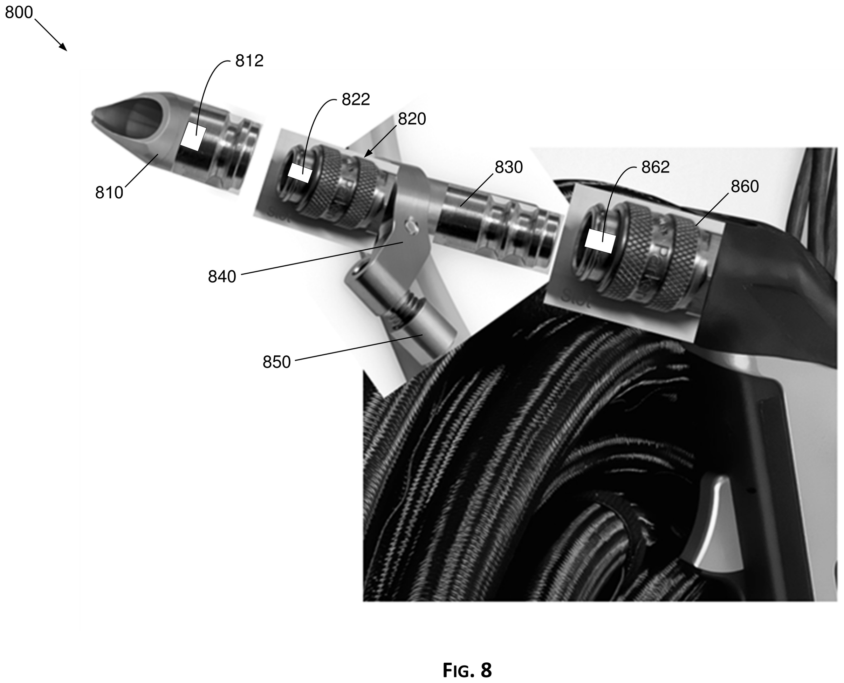

The laser beam 42 can be controlled in any desired pattern, which may include, but is not limited to, a pattern with one or more straight lines and/or one or more curves. In some embodiments, the desired pattern may include a pause or break in the pattern, such as a time interval in which the focal point does not move. The desired pattern may include a circle, an ellipse, a zigzag, a figure 8, a transverse reciprocating line, a crescent, a triangle, a square, a rectangle, a non-linear pattern, an asymmetrical pattern, a pause, or any combination thereof. As may be appreciated, a pattern or a combination of patterns may be used and optimized for particular welds and/or welding positions. The movement of the focal point and the relative movement between the workpiece 20 and the laser welding torch 12 causes the focal point to trace a superimposed pattern over the workpiece 20. The example pattern may be traced by the laser beam 42 to agitate the puddle. The laser welding torch 12 and related components are illustrated in more detail in Fig. 2.

In some example implementations, the laser welding torch 12 directs a laser beam 42 to focus on a location of the workpiece 20. This focal point may correspond to a joint to be welded, but may also result in the laser scanning in one or more patterns, such as near, over and/or about welding wire 36.

In some example implementations, application of the laser beam is configured for cleaning a workpiece, with energy and focal spot settings selected for such an application.

In some example implementations, a laser welding system may employ one or more lasers or laser beams to join multiple workpieces and/or create an object via additive manufacturing techniques.

Fig. 2 illustrates an example handheld laser welding tool employing a beam expanding optic. Shown in Fig. 2 is a portion of the laser welding system 10, providing more detailed illustration of the laser welding torch 12 and other related components that may be used in conjunction therewith, during welding operations.

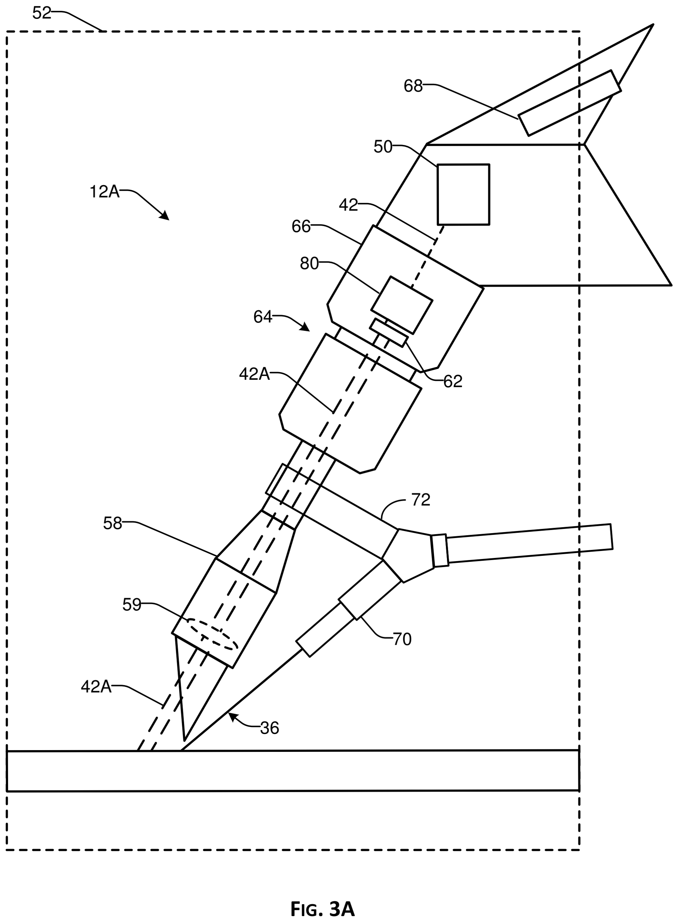

In some example implementations, the laser power source 28 creates the laser beam 42, which is introduced to the laser welding torch 12 via one or more fiber optics, and delivered to one or more optics 50 within the torch. The beam from the laser power source 28 can transmitted to a beam expanding optic 80 (e.g., beam spreading, beam shaping, etc.) to widen a spot size of the laser beam 42 at the workpiece 20 (as shown in detail 80 of Fig. 3A), and/or split into two or more laser beams for application to the workpiece 20 (e.g., via a filter, a mirror, a lens, a diffraction grating, a gradient index lens, etc.). In some example implementations, the welding wire, or filler material, 36 advances to the workpiece 20 via a tube or channel 70 from a wire feeder 32 (which may be a standalone accessory, or may be incorporated with the laser power supply 14). In some example implementations, the channel 10 is connected to the laser welding torch 12 by one or more mounts or brackets 72, which can support and orient the tube to deliver the wire 36 at the point of welding.

Although shown being delivered via tube 70, in some example implementations the wire can be fed through the center of the nozzle 58 (e.g., coaxially), such that the laser beam 42 and the welding wire 36 contact the workpiece and/or the weld bead within a small radius.

In some example implementations shown in Fig. 2, the laser welding torch 12 directs one or more laser beams 42 to contact the workpiece 20. The tube or channel 70 guides welding wire 36 to the workpiece 20 from one or more angles. As shown, the tube 70 can be external to the laser welding torch 12, and can be attached, mounted, and/or integrated with the laser welding torch 12. In some example implementations, the tube 70 can be configured such that the wire 36 contacts the workpiece 20 in a way that assists the operator with moving the torch along at a steady and consistent travel speed.

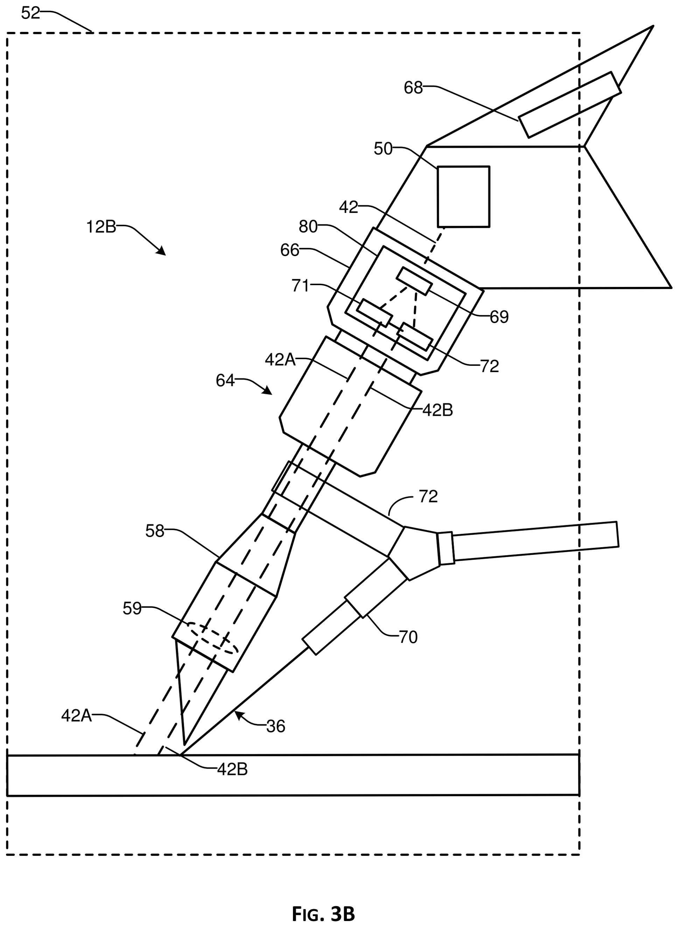

Figs. 3A and 3B illustrate example handheld laser welding tools, in accordance with aspects of this disclosure. Shown in Fig. 3A is a detailed view of area 52 identified in Fig. 2. As shown, the laser welding torch 12A includes an optic 80 to receive the laser beam 42 from the laser source 30 via optic 50 to perform a welding operation. The handheld laser welding torch 12A directs the laser power to the workpiece 20 as a laser beam.

In this example, the optic 80 is configured as a beam expanding optic, such that the laser beam 42 a focal point of the laser beam 42 is widened or increased (e.g., a diameter or area) to form an expanded output beam 42A for application to the workpiece 20.

In examples, the beam expanding optic 80 is a single lens configured to fully or partially expand a size or shape of the focal point of the laser beam. In some example implementations, the optic 80 includes one or more of a convex lens, a concave lens, a mirror, diffraction grating, a gradient index lens, and/or a prism.

In some example implementations, the handheld laser welding torch 12A includes a collimating lens 62 to structure the laser beam. The collimating lens 62 may be included with the optic 80 and/or along an optical path of the output laser beam 42A.

As shown, the beam expanding optic 80 is located within a coupling portion 66 of a torch neck 64. In examples, the optic 80 is integrated with the neck 64, whereas in other examples the optic 80 is removable. For example, the beam expanding optic 80 can be mounted within the coupling 66 and removably attached to the handheld laser welding torch 12A.

In some example implementations, the beam expanding optic 80 includes first and second lenses to expand and/or shape the laser beam 42. For instance, the first lens may be movable relative to the second lens (e.g., via manual rotation, by control from a user interface and movement by a motor or actuator), which serves to adjust a size or shape of the output laser beam 42A applied to the workpiece. The first and second lenses may be separated by an adjustable distance, which changes the diameter of the laser spot on the workpiece.

Although the first and second lenses may be of a similar type, in some example implementations the first lens has a first power, first diameter, first thickness, or first index of refraction different from the second lens.

In some example implementations, the laser welding torch 12A further includes a protective lens or shield 59 to at least partially protect the beam expanding optic. In some example implementations, the protective lens 59 is incorporated within the nozzle, but may also be removable from the nozzle. In some example implementations, the protective lens 59 further changes the output laser beam 42A, by collimating, expanding, and/or shaping the laser beam.

Although illustrated as the laser being provided from a center of the torch (e.g., via the nozzle 58) and the wire 36 provided at an angle (e.g., from an attached tube), in some example implementations the wire is provided from the center of the torch and the laser beam at an angle and/or from an attachment. Thus, in some example implementations, a conventional arc welding torch can be retrofit to use laser welding, whereas a laser welder without a wire feeding tube can be retrofit to receive a wire.

Operation of the wire (e.g., wire feed speed, etc.) and/or laser (e.g., power, scanning pattern, etc.) can be coordinated by the control circuitry 30 (e.g., dynamically and automatically in response to one or more sensor measurements), and/or be controlled by a user interface (e.g., a trigger, button, pedal, etc.). As welders hold a handheld laser tool with their hands, automating changes (e.g., in laser welding parameters, as disclosed herein) and/or coordination between wire feeding and laser application may benefit users. If manual control is desired, a button, trigger, pedal or other device can be used to control the introduction of the welding wire to the weld bead. This can result in a dabbing action or reciprocating motion, with a burst of welding wire advancing quickly for a short amount of time, and/or turning wire feeding on or off during a welding operation.

In some example implementations shown in Fig. 3B, the laser welding torch 12 includes an optic 66 to split a laser beam 42 into two or more laser beams for application to the workpiece 20 (e.g., via a filter, a mirror, a lens, a diffraction grating, a gradient index lens, etc.), and focused from two or more lenses and/or mirrors to converge at the workpiece 20.

In the detailed illustration within the box identified by reference numeral 52, shown in Fig. 3B, laser beam 42 is split at the optic 66 into two or more laser beams 42A and 42B. The optic 66 may be a complex optic with one or more lenses, mirrors, gratings, and/or prisms within an optical path to split, expand, shape and/or control the laser beams. As shown, a beam splitter 69 splits the laser beam 42 and directs laser beam 42A to a first optic 71, and directs laser beam 42B to a second optic 72.

The laser beams 42A and 42B are delivered through the neck 64 (e.g., via an optical fiber and/or waveguide) and directed to a surface of the workpiece 20. As shown, the laser beams are channeled through optic 59 (e.g., a protective lens). Although shown as impinging on a surface of the workpiece at different focal points, in some example implementations the laser beams 42A and 42B are configured to converge at a common point, where the power of each beam is combined.

In some example implementations, one or both of the optics 71 and 72 are beam expanding optics and/or beam control optics (e.g., a mirror or galvanometer) to control scanning and/or wobble of the laser beam on the workpiece. The control optics can be communicably connected to the laser controller, to receive instructions/commands to control the application of the laser light in accordance with a weld schedule or weld profile. In some example implementations, the control optics are arranged within the nozzle 64 or a coupling and/or extension portion connected to the nozzle.

In some example implementations, a user interface 68 is configured to receive instructions from an operator to control one or more wobble variables, such as correlating to a desired bead appearance and/or penetration profile (and/or other possible target parameters). The wobble variables are not limited to laser beam wobble patterns, and may include mechanical wobble patterns, as disclosed herein.

In some example implementations, a diameter of the laser beam 42 is expanded (e.g., by transmission through a beam expanding optic) and then channeled through a control optic, resulting in an output laser beam 42A with an expanded diameter and capable of being scanned in a desired pattern. In other examples, the laser beam 42 first passes through the control optic, and is then transmitted through the beam expanding optic.

For instance, the control or scanning optic can be configured to control movement of the focal point of the output laser beam on the workpiece in X- or Y-directions in accordance with wobble commands. The control optic can receive the expanded laser output beam and then control movement of the expanded laser output beam on the workpiece.

In some example implementations, a first, expanded output laser beam can strike the workpiece. The second, scanning laser beam can be controlled to follow a given pattern. For instance, a location of the focal point of the expanded output beam may be substantially limited by the orientation of the welding laser welding torch 12B, whereas the focal point of the scanning laser beam is controlled to scan the workpiece surface. This may include occasionally or periodically overlapping with, crossing, and/or encircling the focal point of the first, expanded output beam.

One or both of the beams can be controlled to dynamically adjust a power output. For instance, the beams may be scanned, pulsed, and/or have the desired output power adjusted in accordance with a selected weld.

The handheld laser welding torch 12B may include a user interface 68 to receive one or more inputs to control one or both of the laser output beams. For example, a pattern, frequency, and/or a magnitude of the wobble of the laser beams can be set and/or adjusted via the user interface 68.

Although some example implementations illustrate as a single nozzle 58 delivering two laser output beams 42A and 42B, in some example implementations two or more nozzles, and three or more laser beams, are used to direct the beams. The nozzles may be from a single laser torch (e.g., a handheld laser welding torch), and/or may provide laser beams from multiple torches (e.g., a robotic laser welding torch).

In some example implementations, a diameter of the laser beam 42 is expanded (e.g., by transmission through a beam expanding optic) and then channeled through a control optic, resulting in an output laser beam 42A with an expanded diameter and capable of being scanned in a desired pattern. In other examples, the laser beam 42 first passes through the control optic, and is then transmitted through the beam expanding optic.

In various embodiments based on the present disclosure, laser welding torches may be configured for improved assembly. In this regard, a laser welding torch may comprise various components that may need to be put together and/or otherwise made to engage one another before the laser welding torch can be used. For example, the laser welding may typically comprise a collet chuck, a focus tube, a focus adapter (e.g., one for ferrous and the other for nonferrous metals), a wire guide nozzle attachment, welding or cleaning nozzle(s), etc. Many of these components may be configured for engaging one another using suitable connection features or mechanisms (e.g., using threaded connections or the like).

However, such connection features or mechanisms between components may make alignment difficult (e.g., about the laser beam axis). In this regard, it may be difficult to maintain alignment requirements about the axis of the laser beam by indexing the thread start position and shoulder depth especially on fine pitch threads. As such, indexing the rotational position of the welding nozzles, cleaning nozzles, and wire delivery is critical. However, existing solutions and processes for engaging the torch components may not sufficiently ensure component alignment. This may be especially challenging when any of the threaded components are replaced in the system and the stack of all threaded parts must be re-aligned. Further, existing connection features or mechanisms between components may make not accommodate different assembling configurations. In this regard, laser welding torches may need to be assembled differently to accommodate different welding requirements or use conditions (e.g., when using aluminum wire vs. steel wire). Solutions based on the present disclosure may provide improved alignment and/or connection functions in laser welding torches as described in more detail below.

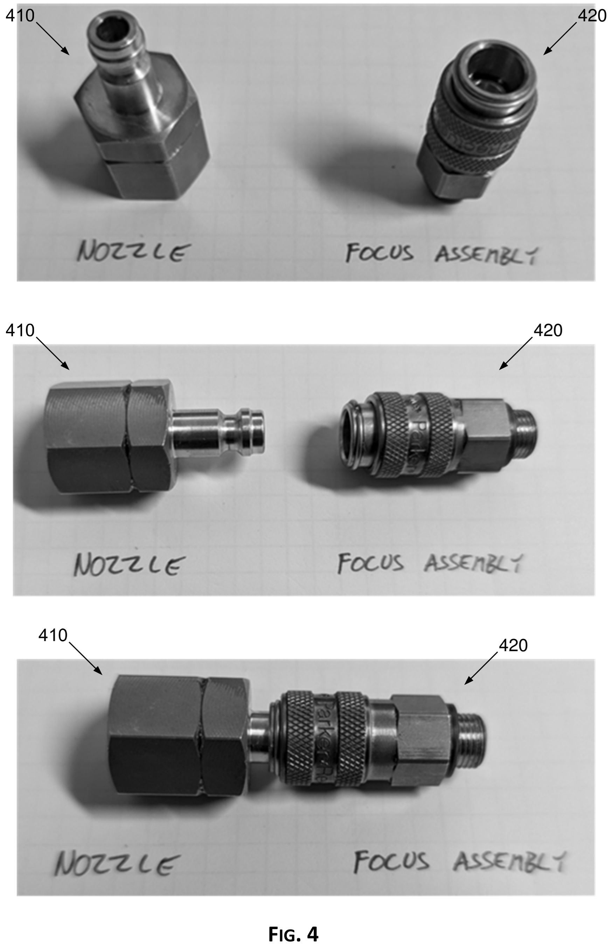

Fig. 4 illustrates example nozzle and focus assembly. Shown in Fig. 4 are a nozzle 410 and a nozzle focus assembly 420, or portions thereof. In this regard, the nozzle 410 and the nozzle focus assembly 420 may be used within-that is, components of-a laser welding torch, such as the laser welding torch 12 described above.

The nozzle 410 and the nozzle focus assembly 420 may engage one another, As illustrated in Fig. 4. As noted, maintaining alignment requirements about the axis of the laser beam may be difficult, particularly when utilizing conventional approaches and/or techniques-e.g., by indexing the thread start position and shoulder depth especially on fine pitch threads.

Solutions based on the present disclosure may address and/or overcome connecting and/or alignment issues. In this regard, in various example embodiments based on the present disclosure, components used in laser welding torches may incorporate indexing features configured for facilitating and/or improving quick connecting and/or aligning of components. For example, matching indexing features (e.g., e.g., key-like and slot-like features) may be added to corresponding component to simplify and ease connecting and/or aligning the components when assembling the torch. Such designs are described in more detail below.

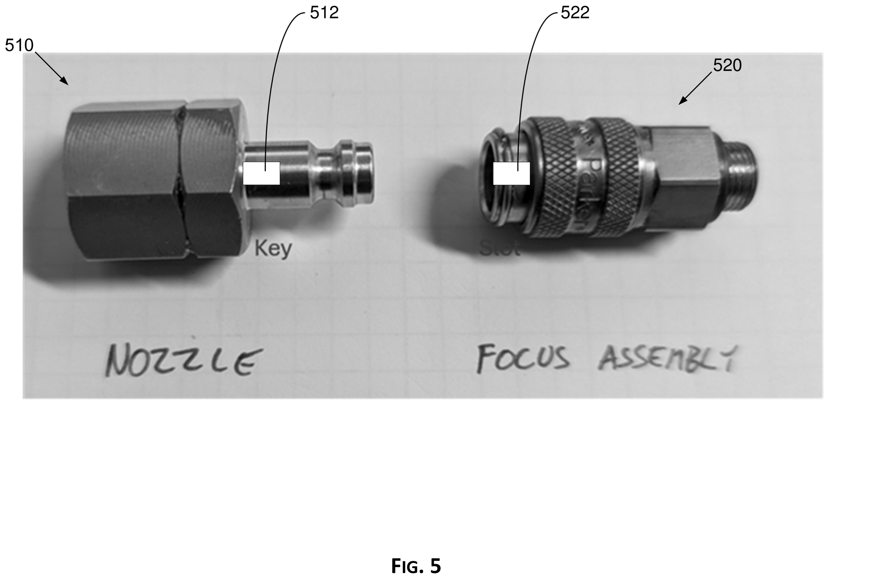

Fig. 5 illustrates example nozzle and focus assembly with indexing features. Shown in Fig. 5 are nozzle 510 and nozzle focus assembly 520, or portions thereof. In this regard, the nozzle 510 and the nozzle focus assembly 520 may be used within-that is, components of-a laser welding torch, such as the laser welding torch 12 described above.

The nozzle 510 and the nozzle focus assembly 520 may be similar to the nozzle 410 and the nozzle focus assembly 420, and may be used and/or operate in similar manner-that is, they may engage each other in substantially the same manner as described. However, the nozzle 510 and the nozzle focus assembly 520 may be configured for improved connecting and/or aligning in accordance with an example embodiment based on the present disclosure.

In this regard, one or both of the nozzle 510 and nozzle focus assembly 520 may incorporate one or more quick connect and aligning indexing features configured for facilitating and/or improving connecting and/or aligning of these components. For example, the nozzle 510 and nozzle focus assembly 520 may incorporate one or more matching indexing features, adaptively configured to ensure and/or optimize the connecting and aligning of these two components.

In the example embodiment illustrated in Fig. 5, the nozzle 510 may comprise a key feature 512, with and nozzle focus assembly 520 incorporating a corresponding matching slot feature 522. The key feature 512 and the slot feature 522 may be designed and/or implemented such that they would be engage one another at the position representing optimal position for connecting and aligning the nozzle 510 and nozzle focus assembly 520.

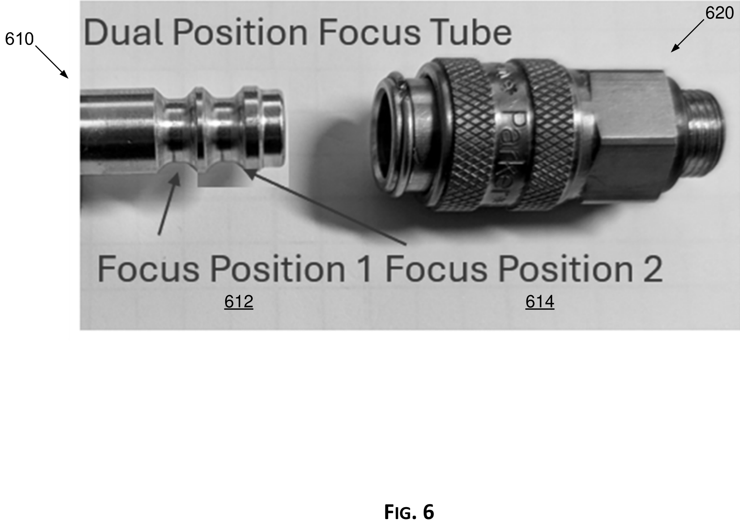

Fig. 6 illustrates example nozzle with dual focus positions and focus assembly. Shown in Fig. 6 are nozzle 610 and nozzle focus assembly 620, or portions thereof. The nozzle 610 and the nozzle focus assembly 620 may be used within-that is, as components of-a laser welding torch, such as the laser welding torch 12 described above.

The nozzle 610 and the nozzle focus assembly 620 may be similar to the nozzle 410 and the nozzle focus assembly 420, and may be used and/or operate in similar manner-that is, they may engage each other in substantially the same manner as described. However, the nozzle 610 incorporates a dual position connector portion, comprising two focus positions 612 and 614 (focus position 1 and focus position 2). As such, the nozzle 610 may engage (e.g., connect to) the nozzle focus assembly 620 at either one of the two focus positions 612 and 614. Nonetheless, the disclosure is not limited to use of dual positions (as shown in Fig. 6), and as such in some implementations more positions may be used. In other words, embodiments based on the present disclosure may generally incorporate multiple focus positions (two or more).

The use of multiple focus positions (e.g., two as shown in Fig. 6) may allow for improved operation of the laser welding torch, by allowing for use of different connecting positions, which may allow for different assembly configurations, such as to accommodate different welding operations. In this regard, the different welding operations may correspond to using to different wire types. This may be because particular types of electrode wire may require defocused beam. For example, with reference to embodiment illustrated in Fig. 6, the focus position 612 (focus position 1) may be used with aluminum electrode wires, whereas the focus position 614 (focus position 2) may be used with steel electrode wires. The use of multiple positions (e.g., if there are two positions for the ball detents) may have the added benefit of eliminating the need for focus extensions.

While not illustrated in Fig. 6, in some implementations the multiple connect positions may be utilized in conjunction with alignment indexing features.

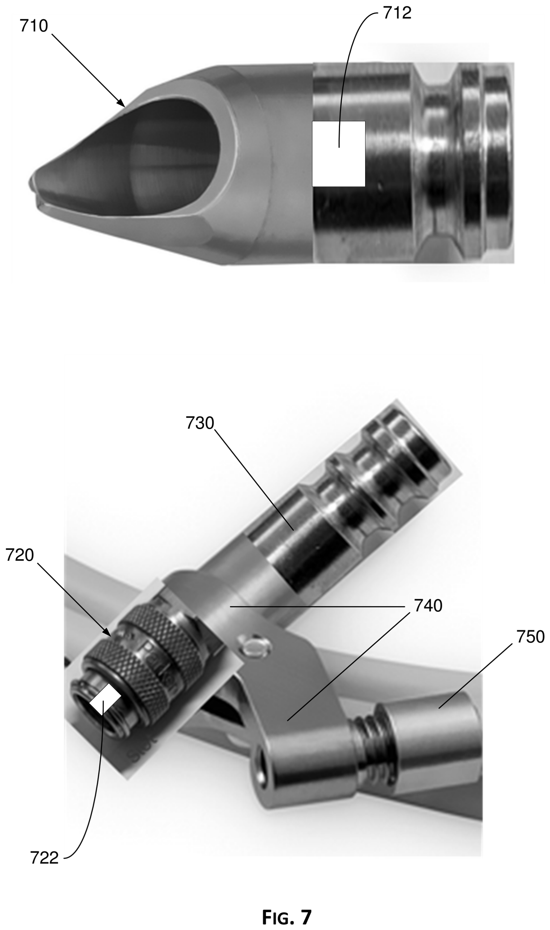

Fig. 7 illustrates various example components of laser welding torch with indexing features. Shown in Fig. 7 are a nozzle 710, a nozzle focus assembly 720, a filler focus assembly 730, a mount 740, and a tube 750. In this regard, one or more of these components may comprise indexing features for enabling combining the components into a single device (the assembled torch). In particular, the indexing features may comprise quick connect and key/slot features.

The nozzle 710, the nozzle focus assembly 720, the filler focus assembly 730, the mount 740, and the tube 750 may be used within (that is, as components of) a laser welding torch, such as the laser welding torch 12 described above. In this regard, when assembling the laser welding torch, the In this regard, the nozzle 710 may engage the nozzle focus assembly 720, which in turn engages the mount 740 on one side, with the filler focus assembly 730 engaging the mount 740 on the other side. The filler focus assembly 730 may be used to engage a power cable (e.g., the power cable 18 in the laser welding system 10). As such, the power cable may comprise a connector configured to engage a corresponding connector at the end of the filler focus assembly 730. This is illustrated in Fig. 8.

Mount 740 may further be used in mounting a tube 750, through which welding wire (or filler material) may advance (e.g., to the workpiece), such as from a wire feeder or the like. In this regard, the mount 740 may be configured (e.g., shaped) to enable feeding the welding wire or filer material at the required angle (e.g., where the weld is applied). For example, as shown in Fig. 7, the Mount 740 may comprise two separate sections, disposed at an angle relative to one another. The angle may be pre-determined and as such fixed. Alternatively, the mount 740 may incorporate adjustment means for allowing adjusting the angles (e.g., to enable use different nozzles).

In accordance with the present disclosure, the nozzle 710 is configured for improved performance, particularly with respect to torch assembly related functions-that is, when the laser welding torch is being assembled and/or the constituent components thereof are being attached or coupled to one another. In particular, the nozzle 710 comprises one or more quick connect and alignment indexing features, configured for facilitating quick connect and alignment with at least one other component of the torch. For example, as shown in Fig. 7, the nozzle 710 comprises an alignment key 712, which may be configured for ensuring alignment between the nozzle 710 with a corresponding component-namely, the nozzle focus assembly 720.

Similarly, the nozzle focus assembly 720 is configured for improved performance, particularly with respect to torch assembly related functions. In particular, the nozzle focus assembly 720 comprises one or more quick connect and alignment indexing features, configured for facilitating quick connect and alignment with at least one other component of the torch. For example, as shown in Fig. 7, the nozzle focus assembly 720 comprises an alignment slot 722, which may be configured for ensuring alignment between the nozzle focus assembly 720 with a corresponding component-namely, the nozzle-side the nozzle 710.

In some instances, other components may also incorporate indexing features. For example, the filler focus assembly 730 (and, optionally, the power cable) may also incorporate indexing features, configured for facilitating and/or improving quick connect and alignment of these components. This is shown in Fig. 8.

Fig. 8 illustrates example assembled laser welding torch with all components. Shown in Fig. 8 is a fully assembled laser welding torch 800 (or portion thereof). In this regard, the laser welding torch 800 comprises a nozzle 810, a nozzle focus assembly 820, a filler focus assembly 830, a mount 840, a tube 850, and a filler wire 860.

Each of these components may be substantially similar to, and/or may operate in substantially similar manner as similar-named components (e.g., the nozzle 710, the nozzle focus assembly 720, the filler focus assembly 730, the mount 740, and the tube 750 of Fig. 7). The components may engage one another, as illustrated in Fig. 8.

In this regard, one or more of these components may comprise alignment indexing features that are used to ensuring alignment of the components in the assembled torch. For example, the nozzle 810 and the nozzle focus assembly 820 may incorporate indexing features-namely, indexing feature 812 (e.g., a key feature) in the nozzle 810, and corresponding indexing feature 822 (e.g., a slot feature) in the nozzle focus assembly 820, which may allow for improved quick connect and alignment of these two components, as described above.

Further, the filler focus assembly 830 also may be configured for improved performance, particularly with respect to torch assembly related functions. In particular, the filler focus assembly 830 comprises one or more quick connect and alignment indexing features, configured for facilitating quick connect and alignment with at least one other component of the torch.

For example, as shown in Fig. 8, the filler focus assembly 830 comprises an indexing feature 832, which may be configured for ensuring alignment between the filler focus assembly 830 and a corresponding component-namely, the filler wire 860. In this regard, the filler wire 860 (or, more specifically, a connector thereof configured for connecting to the filler focus assembly 830) may incorporate a matching indexing feature 862 that is configured to operate in conjunction with the indexing feature 832-e.g., in substantially similar manner as the indexing features 812 and 822. For example, one of the indexing feature 832 and the indexing feature 862 may be a key feature and the other may be a matching slot feature.

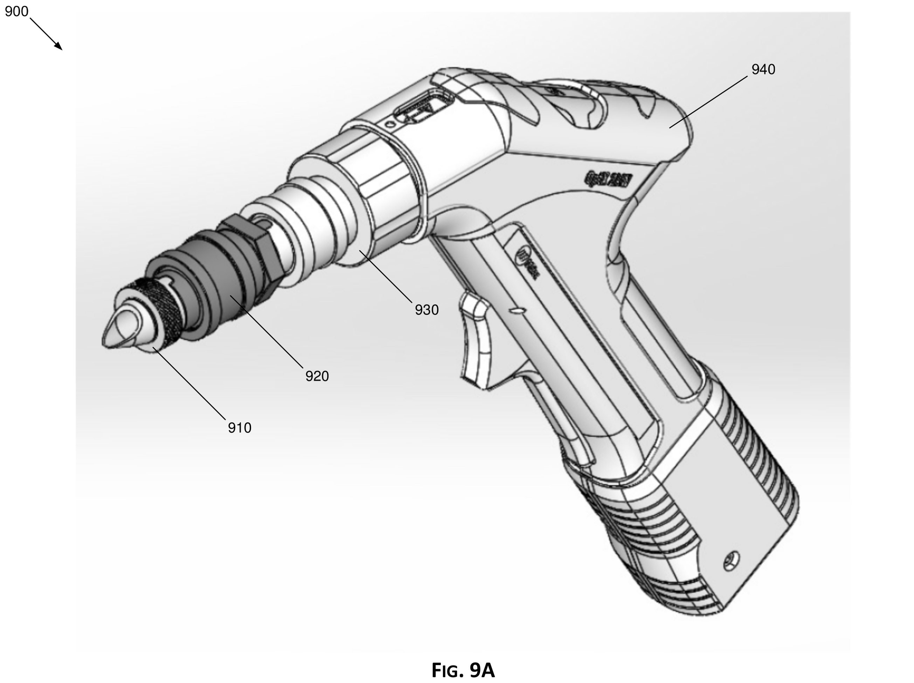

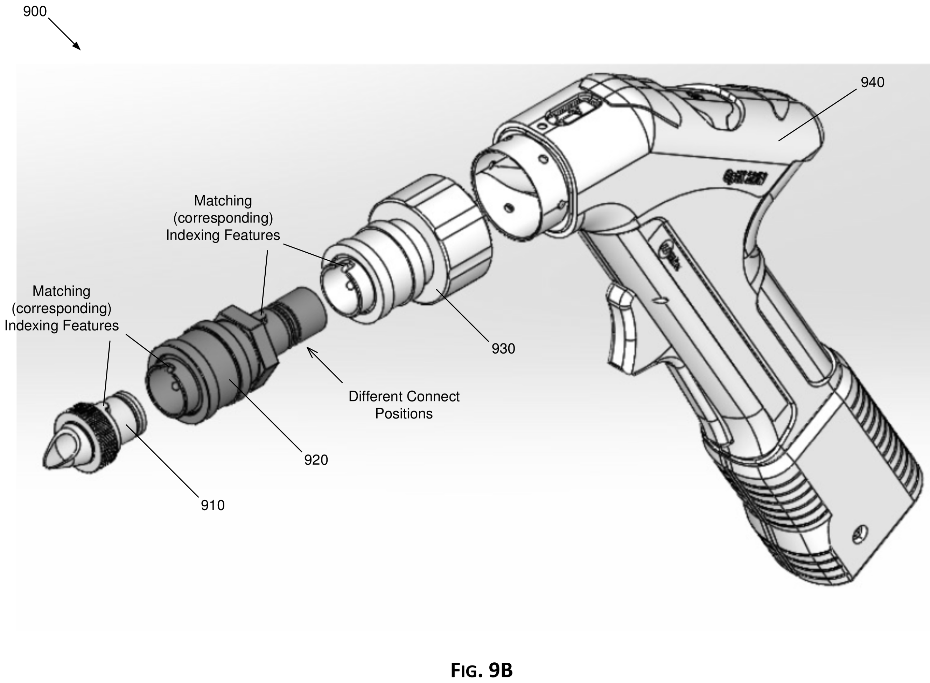

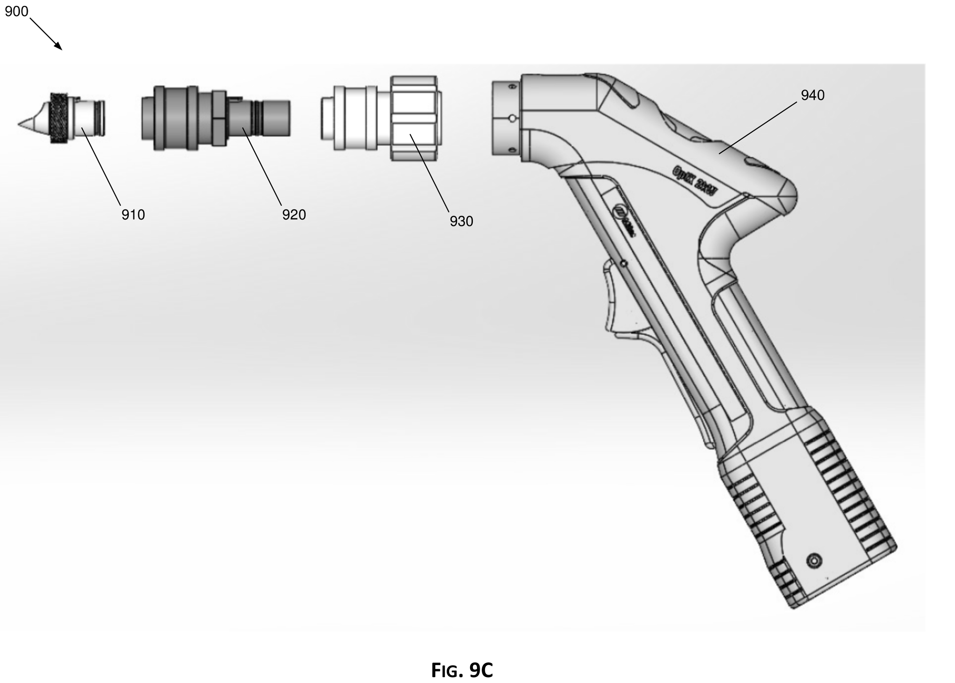

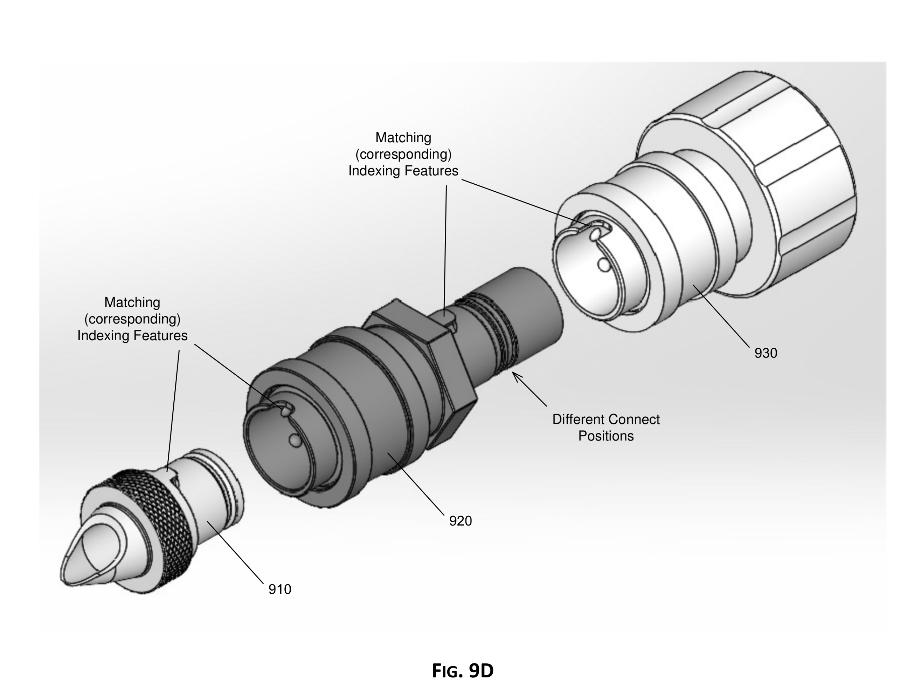

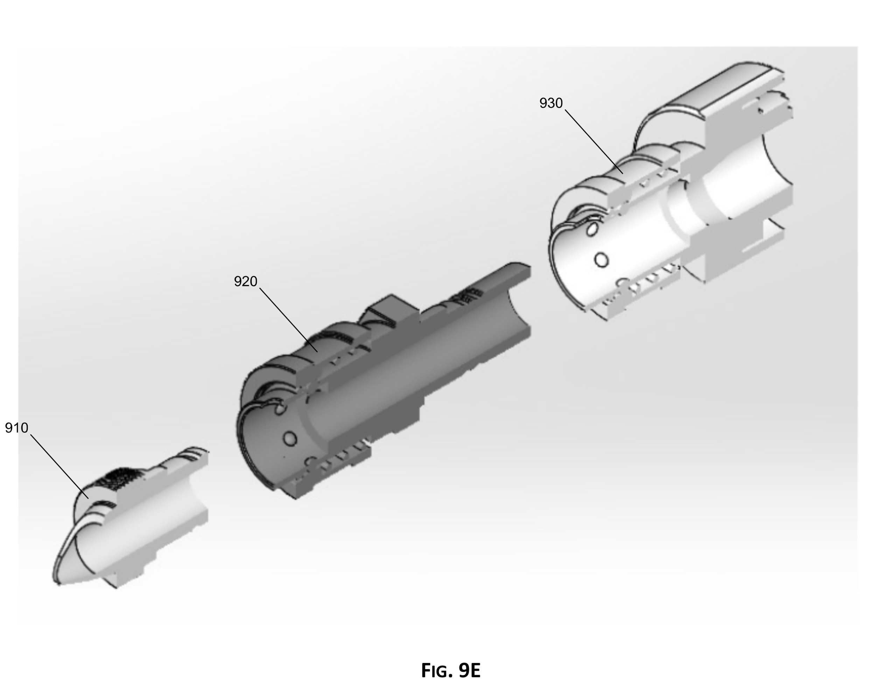

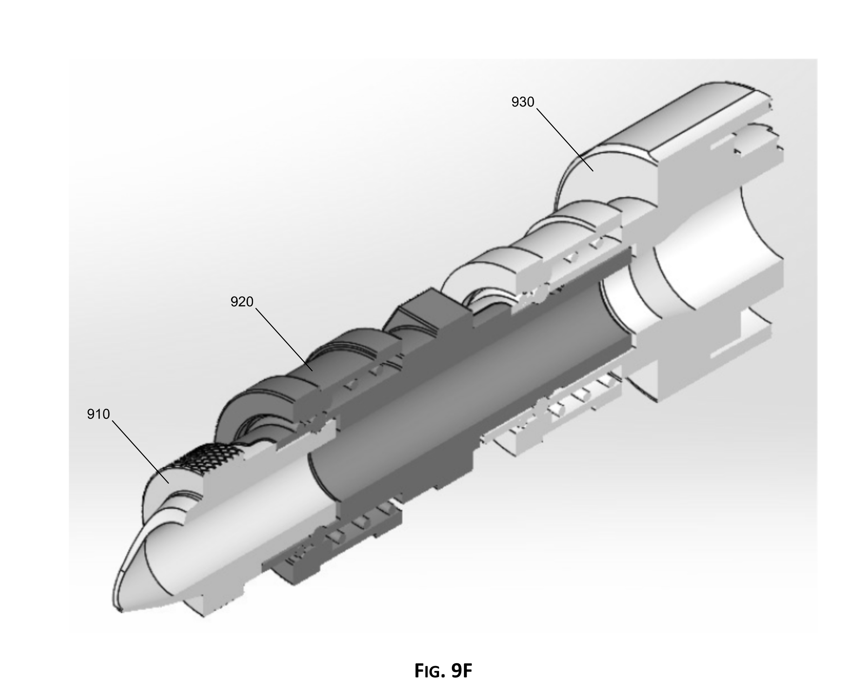

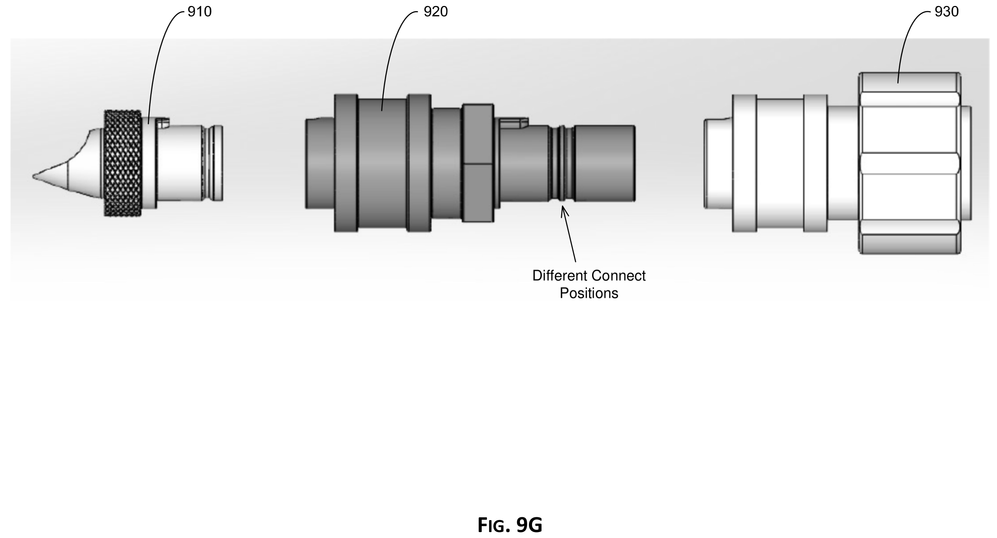

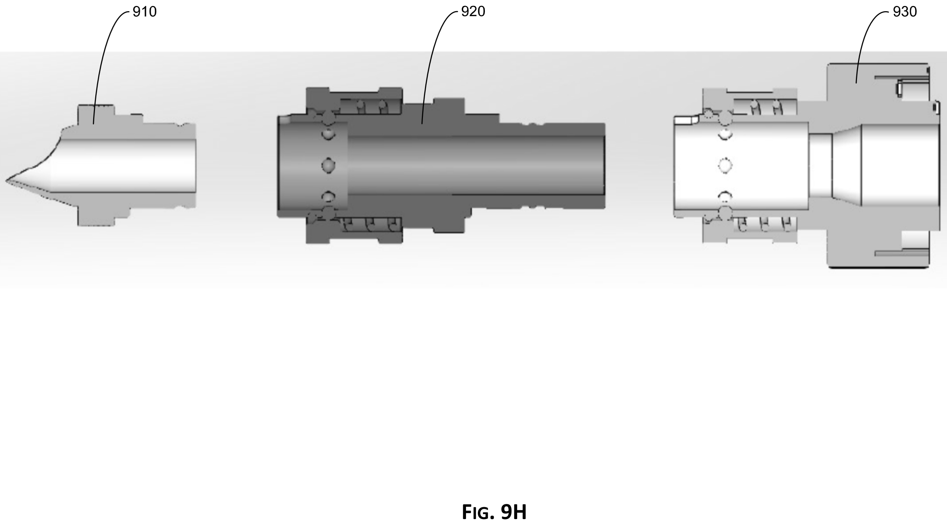

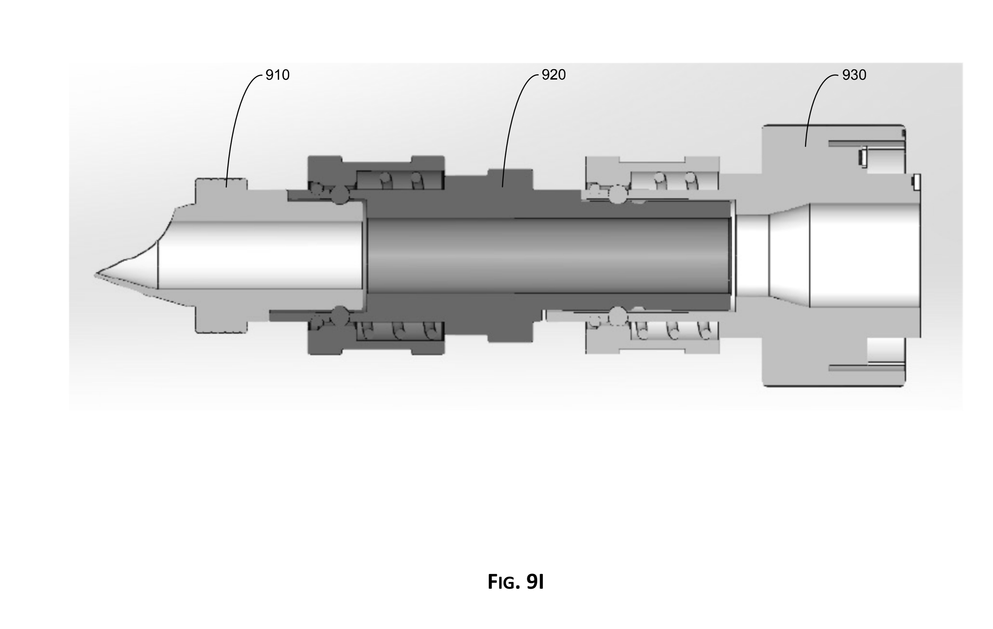

Figs. 9A-9I illustrate and example laser welding torch with components incorporating quick connect and alignment features. Shown in Figs. 9A-9I is example handheld laser welding torch 900 implemented in accordance with the present disclosure. In this regard, the handheld laser welding torch 900 comprises components incorporating quick connect and alignment features as described herein.

As shown in Figs. 9A-9I, the torch 900 comprises a nozzle 910, a nozzle focus assembly 920, a torch neck/filler focus assembly 930, and a main body 940. As illustrated in Figs. 9A-9I, the different components may be attached to one another during assembly of the torch 900, with the quick connect and alignment features allowing for and/or facilitating quick aligning and/or connecting of components. In this regard, at least some of the components of the torch may incorporate matching (corresponding) indexing features configured for facilitating and/or improving quick connecting and/or aligning of the components. For example, the nozzle 910, the nozzle focus assembly 920, and/or the torch neck/filler focus assembly 930 may incorporate quick connect and alignment features such as key-like and corresponding slot-like features, matching indexing features, etc. to simplify and ease connecting and/or aligning the components when assembling the torch, as described herein.

Further, the torch 900 may be configured to enable and/or facilitate supporting use of different connect positions. In this regard, one or more components of the torch 900 may incorporate features allowing for different connecting positions, which may correspond to different focus positions. For example, two components of the torch 900 (e.g., the nozzle focus assembly 920 and the torch neck/filler focus assembly 930, as shown in Figs. 9A-9I) may incorporate corresponding or matching connecting features, configured to allow for or support multiple different connecting positions, which may correspond to different selectable focus positions-that is, different focal lengths. Use and/or support of such multiple different connecting positions may allow for improved operation of the torch 900 by allowing for use of different focus lengths which may accommodate different welding operations.

An example welding-type system, in accordance with the present disclosure, comprises a laser welding torch comprising a plurality of torch components, wherein the plurality of torch components are configured to engage one another when assembling the laser welding torch; and one or more torch components of the plurality of torch components comprise one or more indexing features configured for enabling quick alignment of at least two torch components of the plurality of torch components during the assembling of the laser welding torch.

In an example embodiment, the one or more indexing features comprise at least one of a key feature and a slot feature.

In an example embodiment, the one or more indexing features comprise a first indexing feature on a first torch component and a corresponding second indexing feature on a corresponding second torch component.

In an example embodiment, the first indexing feature and the second indexing feature are configured to match or engage one another to enable quick alignment of the first torch component and the second torch component.

In an example embodiment, the first indexing feature comprises a key feature and the second indexing feature comprises a slot feature.

In an example embodiment, the first torch component comprises a nozzle and the second torch component comprises a nozzle focus assembly.

In an example embodiment, the first torch component comprises a filler focus assembly and the second torch component comprises a filler wire configured to connect to the laser welding torch.

Another example welding-type system, in accordance with the present disclosure, comprises a laser welding torch comprising a plurality of torch components, wherein the plurality of torch components are configured to engage one another to assemble the laser welding torch; and one or more torch components of the plurality of torch components comprise one or more connect features configured for enabling quick connect of at least two torch components of the plurality of torch components during the assembling of the laser welding torch.

In an example embodiment, the one or more connect features are configured to enable accommodating a plurality of different welding configurations.

In an example embodiment, the plurality of different welding configurations differ from one another with respect to at least one welding related condition, parameter, or characteristic.

In an example embodiment, at least two of the plurality of different welding configurations differ based on a type of electrode wire used during welding operation.

In an example embodiment, the one or more connect features comprise a plurality of different connect positions.

In an example embodiment, the plurality of different connect positions is disposed on a first torch component, and wherein a second torch component is configured to engage the first torch component at each one of the plurality of different connect positions.

In an example embodiment, the first torch component comprises one of a nozzle and a nozzle focus assembly, wherein the second torch component comprises other one of the nozzle and the nozzle focus assembly, and wherein the plurality of different connect positions comprises a plurality of different focus positions.

In an example embodiment, the plurality of different focus positions comprises at least a first focus position and a second focus position, and wherein each of the first focus position and the second focus position is associated with a different welding related condition, parameter, or characteristic.

In an example embodiment, the first focus position corresponds to one of an aluminum electrode wire and a steel electrode wire, and the second focus position corresponds to other one of the aluminum electrode wire and the steel electrode wire.

Accordingly, solutions based on the present disclosure may yield various advantages over any existing conventional solutions for connecting and aligning components of laser welding torches. For example, in implementations in accordance with the present disclosure: 1) the position of nozzles is consistent after changeover, 2) the position of wire delivery hardware is consistent after changeover, 3) changing the nozzles is fast and easy, 4) changing accessories between autogenous welding, wire delivery welding, and cleaning is fast and easy, 5) the focus adapter components may be eliminated (which eliminates a common source of user error), and 6) the wire guide nozzle attachment may be eliminated (which may eliminate inconsistency introduced by the user).

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:
Clause 1 A welding-type system comprising:
   a laser welding torch comprising a plurality of torch components,
   wherein:
      the plurality of torch components are configured to engage one another when assembling the laser welding torch; and
      one or more torch components of the plurality of torch components comprise one or more indexing features configured for enabling quick alignment of at least two torch components of the plurality of torch components during the assembling of the laser welding torch.
Clause 2 The welding-type system of clause 1, wherein the one or more indexing features comprise at least one of a key feature and a slot feature.
Clause 3 The welding-type system of clause 1, wherein the one or more indexing features comprise a first indexing feature on a first torch component and a corresponding second indexing feature on a corresponding second torch component.
Clause 4 The welding-type system of clause 3, wherein the first indexing feature and the second indexing feature are configured to match or engage one another to enable quick alignment of the first torch component and the second torch component.
Clause 5 The welding-type system of clause 3, wherein the first indexing feature comprises a key feature and the second indexing feature comprises a slot feature.
Clause 6 The welding-type system of clause 3, wherein the first torch component comprises a nozzle and the second torch component comprises a nozzle focus assembly.
Clause 7 The welding-type system of clause 3, wherein the first torch component comprises a filler focus assembly and the second torch component comprises a filler wire configured to connect to the laser welding torch.
Clause 8 A welding-type system comprising:
   a laser welding torch comprising a plurality of torch components,
   wherein:
      the plurality of torch components are configured to engage one another to assemble the laser welding torch; and
      one or more torch components of the plurality of torch components comprise one or more connect features configured for enabling quick connect of at least two torch components of the plurality of torch components during the assembling of the laser welding torch.
Clause 9 The welding-type system of clause 8, wherein the one or more connect features are configured to enable accommodating a plurality of different welding configurations.
Clause 10 The welding-type system of clause 9, wherein the plurality of different welding configurations differ from one another with respect to at least one welding related condition, parameter, or characteristic.
Clause 11 The welding-type system of clause 10, wherein at least two of the plurality of different welding configurations differ based on a type of electrode wire used during welding operation.
Clause 12 The welding-type system of clause 8, wherein the one or more connect features comprise a plurality of different connect positions.
Clause 13 The welding-type system of clause 12, wherein the plurality of different connect positions is disposed on a first torch component, and wherein a second torch component is configured to engage the first torch component at each one of the plurality of different connect positions.
Clause 14 The welding-type system of clause 13, wherein the first torch component comprises one of a nozzle and a nozzle focus assembly, wherein the second torch component comprises other one of the nozzle and the nozzle focus assembly, and wherein the plurality of different connect positions comprises a plurality of different focus positions.
Clause 15 The welding-type system of clause 14, wherein the plurality of different focus positions comprises at least a first focus position and a second focus position, and wherein each of the first focus position and the second focus position is associated with a different welding related condition, parameter, or characteristic.
Clause 16 The welding-type system of clause 15, wherein the first focus position corresponds to one of an aluminum electrode wire and a steel electrode wire, and the second focus position corresponds to other one of the aluminum electrode wire and the steel electrode wire.

## Claims

1. A welding-type system comprising:
a laser welding torch comprising a plurality of torch components,
wherein:
the plurality of torch components are configured to engage one another when assembling the laser welding torch; and
one or more torch components of the plurality of torch components comprise one or more indexing features configured for enabling quick alignment of at least two torch components of the plurality of torch components during the assembling of the laser welding torch.

2. The welding-type system of claim 1, wherein the one or more indexing features comprise at least one of a key feature and a slot feature.

3. The welding-type system of claim 1, wherein the one or more indexing features comprise a first indexing feature on a first torch component and a corresponding second indexing feature on a corresponding second torch component.

4. The welding-type system of claim 3, wherein the first indexing feature and the second indexing feature are configured to match or engage one another to enable quick alignment of the first torch component and the second torch component.

5. The welding-type system of claim 3, wherein the first indexing feature comprises a key feature and the second indexing feature comprises a slot feature.

6. The welding-type system of claim 3, wherein the first torch component comprises a nozzle and the second torch component comprises a nozzle focus assembly.

7. The welding-type system of claim 3, wherein the first torch component comprises a filler focus assembly and the second torch component comprises a filler wire configured to connect to the laser welding torch.

8. A welding-type system comprising:
a laser welding torch comprising a plurality of torch components,
wherein:
the plurality of torch components are configured to engage one another to assemble the laser welding torch; and
one or more torch components of the plurality of torch components comprise one or more connect features configured for enabling quick connect of at least two torch components of the plurality of torch components during the assembling of the laser welding torch.

9. The welding-type system of claim 8, wherein the one or more connect features are configured to enable accommodating a plurality of different welding configurations.

10. The welding-type system of claim 9, wherein the plurality of different welding configurations differ from one another with respect to at least one welding related condition, parameter, or characteristic.

11. The welding-type system of claim 10, wherein at least two of the plurality of different welding configurations differ based on a type of electrode wire used during welding operation.

12. The welding-type system of claim 8, wherein the one or more connect features comprise a plurality of different connect positions.

13. The welding-type system of claim 12, wherein the plurality of different connect positions is disposed on a first torch component, and wherein a second torch component is configured to engage the first torch component at each one of the plurality of different connect positions.

14. The welding-type system of claim 13, wherein the first torch component comprises one of a nozzle and a nozzle focus assembly, wherein the second torch component comprises other one of the nozzle and the nozzle focus assembly, and wherein the plurality of different connect positions comprises a plurality of different focus positions.

15. The welding-type system of claim 14, wherein the plurality of different focus positions comprises at least a first focus position and a second focus position, and wherein each of the first focus position and the second focus position is associated with a different welding related condition, parameter, or characteristic, and optionally wherein the first focus position corresponds to one of an aluminum electrode wire and a steel electrode wire, and the second focus position corresponds to other one of the aluminum electrode wire and the steel electrode wire.
